# EUROPÄISCHE PATENTSCHRIFT

(11) **EP 2 333 218 B1**
(45) Veröffentlichungstag und Bekanntmachung des Hinweises auf die Patenterteilung: **14.02.2018**
(21) Anmeldenummer: 10013975.7
(22) Anmeldetag: 26.10.2010
(51) Int. Cl.: E05F 1/16

(54) **Einrichtung zum Dämpfen der Relativbewegung bewegter Vorrichtungsteile, insbesondere von Schiebetüren**
Device for damping the relative motion of moving parts, in particular sliding doors
Dispositif d'amortissement du mouvement relatif d'éléments mobiles, notamment de portes coulissantes

(30) Priorität: 14.12.2009 DE 202009016834 U
(43) Veröffentlichungstag der Anmeldung: 15.06.2011
(73) Patentinhaber: Krischke-Lengersdorf, Christian, 82067 Ebenhausen (DE)
(72) Erfinder: Krischke-Lengersdorf, Christian, 82067 Ebenhausen (DE); Lengersdorf, Johannes, 82515 Wolfratshausen (DE); Eberstein, Sven, 82515 Wolfratshausen (DE)
(74) Vertreter: Szynka, Dirk

(56) Entgegenhaltungen:
- WO-A1-2006/056606
- DE-A1- 2 818 439
- DE-C1- 10 019 738

## Beschreibung

Die vorliegende Erfindung bezieht sich auf eine Dämpfungseinrichtung, mit der Relativbewegungen zwischen Vorrichtungsteilen gedämpft werden sollen, insbesondere Bewegungen von Schiebetüren oder auch anderen Türen oder Möbelteilen. In Betracht kommen insbesondere Möbelteile wie Klappen, Schubladen oder Türen, insbesondere Schranktüren und auch von Möbeln unabhängige Türen, so etwa bei Raumteilungssystemen. Auch Kühleinrichtungen, z. B. in großen Lebensmittelgeschäften und Supermärkten, können entsprechende Türsysteme, insbesondere natürlich Schiebetürsysteme, aufweisen.

Es ist an sich längst bekannt, Bewegungen mechanisch zu dämpfen, beispielsweise die Ein- und/oder Auszugsbewegungen einer Möbelschublade oder einer Schiebetür. Damit soll verhindert werden, dass eine Schublade oder Schiebetür wegen etwas zu heftiger Betätigung übermäßig schnell geöffnet oder geschlossen wird und mit Lärm und Erschütterungen verbunden an einen jeweiligen Endanschlag stößt. Solche Fehlbetätigungen können durch mangelnde Achtsamkeit, aber auch durch falsche intuitive Annahmen über den Beladungszustand der Schublade oder die Masse der Tür und damit zu große Kräfte bei der Betätigung entstehen.

Auch kann es erwünscht sein, eine große Schiebetür oder schwer beladene Schublade, die wegen der Masseträgheit mit einer gewissen Kraft beschleunigt werden muss, um eine Schließ- oder Öffnungsbewegung zu beginnen, nicht ungedämpft bzw. ungebremst in die entgegengesetzte Position fahren zu lassen. Gerade bei schweren Schiebetüren sind zur Beschleunigung der Tür größere Kräfte erforderlich, wobei es für den Benutzer unkomfortabel ist, die Tür vor dem Endanschlag manuell abfangen zu müssen.

Analoge Überlegungen gelten für viele andere Anwendungsfälle, beispielsweise das Öffnen und Schließen von anderen beweglichen Möbelteilen wie Türen oder Klappen, für Fensterflügel oder Zimmer- und Haustüren im. Luftzug sowie für Rollläden, insbesondere für Möbel usw. Diese Bereiche sind denkbare und bevorzugte, jedoch nicht ausschließliche Anwendungsbereiche der im Folgenden erläuterten Erfindung.

Beispiele für einen bekannten Aufbau einer solchen Dämpfungseinrichtung finden sich in der WO 2006/056606.

Die DE 100 19 738 C1 zeigt ein motorisch antreibbares Klappenscharnier, bei dem zur manuellen Betätigbarkeit beim Motorausfall entweder eine Lamellenkupplung vorgesehen ist oder der Motor im Leerlauf drehbar ist.

Die DE 28 18 439 A bezieht sich auf einen motorischen Türantrieb mit einer Tellerfederaufhängung zur Stoßdämpfung und einer Überlastkupplung.

Der Erfindung liegt das technische Problem zugrunde, erweiterte Anwendungsmöglichkeiten für eine Dämpfungseinrichtung zu finden.

Die Erfindung richtet sich auf eine Einrichtung zum Dämpfen der Relativbewegung bewegter Vorrichtungsteile mit einem Dämpfer, einer Kupplung zum Herstellen und Lösen eines Kraftschlusses zwischen einem ersten der Vorrichtungsteile und einem Ende des Dämpfers, wobei ein anderes Ende des Dämpfers mit einem zweiten der Vorrichtungsteile gekoppelt ist, sodass der Dämpfer im geschlossenen Zustand der Kupplung eine Relativbewegung zwischen den beiden Vorrichtungsteilen dämpft, und wobei die beiden Vorrichtungsteile in zwei entgegengesetzten Richtungen zueinander bewegbar sind, dadurch gekennzeichnet, dass sich die Kupplung bei Relativbewegungen der beiden Vorrichtungsteile in beiden Richtungen lösen kann, sowie auf ein damit ausgestaltetes Schiebetürsystem und die Verwendung der Dämpfungseinrichtung hierfür.

Bevorzugte Ausgestaltungen sind in den abhängigen Ansprüchen angegeben und werden im Folgenden neben der Erfindung in ihrem allgemeinen Sinn näher erläutert. Dabei können die verschiedenen Merkmale auch grundsätzlich für alle Anspruchskategorien von Bedeutung sein. Die Offenbarung soll sich ausdrücklich auch auf ein Verfahren zum Dämpfen der Relativbewegung, auf die Herstellung entsprechender Dämpfungseinrichtungen und Schiebetürsysteme und auf die beanspruchte Verwendung richten, und zwar im Zusammenhang mit grundsätzlich allen offenbarten Einzelmerkmalen.

Eine Grundidee der Erfindung liegt darin, die Dämpfungseinrichtung mit einer Kupplung zu versehen, die sich bei Relativbewegungen in zwei entgegengesetzten Richtungen lösen kann. Demzufolge können sich die Kupplungsteile und vorzugsweise dann auch die bewegten Vorrichtungsteile in beiden Richtungen voneinander entfernen. Die Dämpfungseinrichtung kann also insbesondere in einer Mittelposition einer Gesamtbewegungsstrecke angeordnet werden. Dabei bedeutet der Begriff "Mitte" nicht zwingend, dass die verbleibenden Bewegungsstrecken in beiden Richtungen ungefähr gleich lang sind. Es geht lediglich darum, dass in beide Richtungen noch Bewegungsstrecken existieren, die Dämpfungseinrichtung also nicht im Zusammenhang mit einer Endposition eingesetzt wird. Im bekannten Stand der Technik sind hingegen verschiedenartige Dämpfungseinrichtungen beschrieben, die eben dieses Anfahren einer Endposition betreffen.

Damit schafft die Erfindung neue Einsatzmöglichkeiten, etwa indem eine Schiebetür in einer bestimmten Position eine Öffnung verschließt oder verdeckt und aus dieser Position heraus nach zwei Seiten verschoben werden kann. Es könnte sich zum Beispiel um ein mittleres Element eines mehrteiligen Schiebetürsystems handeln. Die Dämpfungseinrichtung kann dann das (anfängliche) Herausbewegen des Schiebetürelements aus der mittleren Position und/oder das Hineinfahren in diese Position und/oder das über die Position Hinausfahren dämpfen, worauf im Zusammenhang mit den Ausführungsbeispielen noch näher eingegangen wird. Hierbei ist insbesondere daran gedacht, dass die Dämpfungswirkung nur für einen vergleichsweise kleineren Teil der an sich auftretenden Bewegungsstrecken des Vorrichtungsteils, hier des Schiebetürelements, in Erscheinung tritt.

Bei dem Dämpfer selbst kann es sich vorzugsweise um ein Lineardämpfer und ebenfalls vorzugsweise um einen pneumatischen Dämpfer handeln, wozu auf die bereits zitierte WO 2006/056606 verwiesen werden kann.

Die Kupplung funktioniert vorzugsweise mechanisch, insbesondere durch einen körperlichen Anschlag oder einen Formschluss oder eine Kombination aus beidem. Sie verzichtet also vorzugsweise auf nichtmechanische Kopplungen, etwa magnetische Kopplungen.

Bei einer Ausgestaltung weist die Kupplung ein hier als Schieber bezeichnetes Element auf, das entlang einer bestimmten Strecke bewegt werden kann und in zumindest einem abgewinkelten Endstück einer solchen Schiebestrecke eine Freigabeposition erreichen kann. In dieser Freigabeposition wird die Kupplung also gelöst, und zwar vorzugsweise durch das Einfahren in die Freigabeposition selbst. Beispielsweise kann sich ein Stift damit aus einem Bereich heraus bewegen, in dem er an einen Anschlag stoßen kann, oder kann ein eine mechanische Kopplung, etwa durch Formschluss, herstellendes Element aus einem solchen Bereich heraus bewegt oder in seiner Orientierung so verändert (verkippt) werden, dass eine Freigabe möglich wird. Zur Veranschaulichung wird wieder auf die Ausführungsbeispiele verwiesen.

Andererseits kann die Kupplung ein Anschlagelement aufweisen, insbesondere an dem nicht den Dämpfer tragenden Vorrichtungsteil, das nach einer Seite fest und nach einer anderen Seite nachgebend gehalten ist, also gewissermaßen als richtungsabhängiger Anschlag funktioniert. Beispielsweise kann es sich dabei um einen Hebel handeln, der in einer gelenkigen Lagerung In einer Richtung anschlägt und in einer anderen Richtung ausweichen kann. Insbesondere kann bei einem zweiarmigen Hebel der zweite Arm zum Anschlagen im Sinne einer Blockade des Anschlagelements und der erste Arm zum Anschlagen eines weiteren Kupplungselements dienen, wobei die beiden Hebelarme beispielsweise gewinkelt verlaufen können, insbesondere rechtwinklig.

Bei einer anderen Ausgestaltung ist der bereits erwähnte Schieber gabelartig ausgebildet, weist also eine Einbuchtung zwischen zwei vorstehenden Teilen auf, und soll mit dieser gabelartigen Einbuchtung ein Anschlagelement umgreifen. Dadurch wird insbesondere im Mittelbereich der Schiebestrecke die erwünschte Kopplung zwischen den Kupplungsteilen hergestellt und kann In der bereits erwähnten Freigabeposition, insbesondere infolge einer Verkippung des gabelartigen Elements dort, das Anschlagelement aus der Gabeleinbuchtung heraus bewegt werden.

Erfindungsgemäß können zusätzlich elastische Einrichtungen vorgesehen sein, vorzugsweise Federn. Mit "Feder" ist hier ein aus üblichem metallischem Federmaterial aufgebautes Federelement gemeint, insbesondere eine Schraubenfeder. Gummielastische oder andere elastische Elemente sollen in dem Begriff "elastische Einrichtung", aber nicht in dem Begriff "Feder" inbegriffen sein. Mit der elastischen Einrichtung lässt sich ein Kupplungsteil, insbesondere der Schieber, aus einer Freigabeposition und/oder In die Mittelposition entlang einer Schiebestrecke zurückstellen (wobei die Mittelposition auch hier wieder nicht zwingend symmetrisch in der Mitte liegen muss).

Insbesondere können zwei beidseits des Schiebers angeordnete und mit ihm gekoppelte Schraubenfedern verwendet werden, die im kraftfreien Zustand des Schiebers eine Mittelposition vorgeben, wobei bei einer Bewegung daraus zur Seite zumindest eine der Federn elastisch gespannt wird.

In diesem Zusammenhang kann vorgesehen sein, dass die Kupplung die beiden Vorrichtungsteile mitnimmt, also die Federbeaufschlagung für eine Positionseinstellung zwischen den Vorrichtungsteilen sorgt. Dies ist jedoch nicht zwingend. Insbesondere bei dem erwähnten richtungsabhängig arbeitenden Anschlagelement kann sich die Kupplung hierbei auch lösen, wozu auf die Ausführungsbeispiele im Vergleich miteinander verwiesen wird.

Weitere Aspekte der Erfindung betreffen Schiebetürsysteme mit einer erfindungsgemäßen Dämpfungseinrichtung bzw. die Verwendung der selben für ein solches Schiebetürsystem, bei dem also das Türelement oder Türblatt translatorisch verschoben wird, um die Türöffnung zu verschließen oder freizugeben.

Schiebetürsysteme finden Anwendung im Möbelbau, bei Zimmer- oder Haustüren, bei Raumteilern, auch zur Abgrenzung von begehbaren Schränken, Kühlgeräten oder -räumen, aber auch bei größeren Hallentoren, Garagentoren u.Ä. Je nach Anwendung sind die zu bewegenden Schiebetürelemente schwer.

Es ist vorteilhaft, (insbesondere nur) Teile der Schiebebewegung eines Schiebetürelements durch einen Dämpfer abzudämpfen. Dies betrifft nicht nur die Schiebetürbewegung in der Umgebung der Grenzen der Bewegungsstrecke, d. h. der Anschläge.

Die Erfindung richtet sich hier auch auf ein Schiebetürsystem mit einer Dämpfungseinrichtung nach der vorstehenden Beschreibung, die insbesondere einerseits an einer Schiene zum Halten und andererseits an dem Schiebetürelement angebracht ist, wobei der Dämpfer so Innerhalb der Schiene angebracht ist, dass er durch die Schiene in der auf dem Schiebetürelement senkrechten Blickrichtung abgedeckt ist.

Die Grundidee besteht darin, dass bei den allermeisten gängigen Schiebetürsystemen ohnehin Schienen vorgesehen sind, die das Schiebetürelement nicht nur halten, sondern auch mit einem Schienenschenkel zumindest einen Raum oberhalb der entsprechenden Seitenkante des Schiebetürelements umfassen und abdecken. Hierbei ist die Blickrichtung auf das Schiebetürelement, also senkrecht in Bezug auf seine flächige Erstreckung, gemeint. "Halten" bedeutet hier nicht notwendigerweise, dass die Schiene das gesamte Gewicht oder überhaupt nur das Gewicht des Schiebetürelements trägt, sondern bezieht sich auch auf solche Fälle, in denen die Schiene beispielsweise nur gegen ungewünschte seitliche Bewegungen, also gewissermaßen in der erwähnten Blickrichtung, vorgesehen ist und Insoweit das Schiebetürelement in der Bahn hält.

Die Schiene kann mit ihrem Schenkel die Seitenkante selbst umfassen und abdecken oder auch, in horizontaler Blickrichtung gesehen, im Wesentlichen an die Seitenkante anschließen. Dann deckt sie einen Raum oberhalb der Seitenkante ab, der für Montagelement u.Ä. Verwendung findet und daher vor Blicken geschützt werden soll. Natürlich kann es dabei einen kleinen Schlitz geben, sodass der Begriff des Abdeckens nur im Sinne eines im Wesentlichen Abdecken zu verstehen ist.

Wenn nun diese Schiene auch dazu ausgenutzt wird, die Dämpfungseinrichtung selbst abzudecken, indem diese innerhalb der Schiene angeordnet wird, so sind die sonst am Markt zu beobachtenden Verschlechterungen des äußeren Erscheinungsbildes durch Dämpferkonstruktionen vermeidbar. Dazu muss die Schiene allenfalls etwas größere Abmessungen aufweisen als sonst notwendig. Es hat sich aber sogar herausgestellt, dass im Rahmen bevorzugter Ausgestaltungen dieser Erfindung schlanke Bauformen des Dämpfers möglich sind, insbesondere die Linearzylinder, die ohne Weiteres auch in bestehenden Standardschienensystemen verbaut werden können.

Demgegenüber kann bei der Erfindung die Dämpfungseinrichtung in einer durch die Schiene selbst allenfalls im Sinne des zur Verfügung stehenden Volumens (bzw. der Baubreite und -höhe) beschränkten Weise montiert und mit der Schiene und dem Schiebetürelement verbunden werden. Wenn gewünscht, können aufwändige Gehäusekonstruktionen, die in anderen Fällen schon aus ästhetischen Gründen, wegen des sonst nicht gegebenen Berührschutzes oder aus anderen Gründen erforderlich sein können, weggelassen werden.

Bevorzugt ist die Dämpfungseinrichtung zwischen der Schiene und dem Schiebetürelement montiert. Dies ist allerdings nicht unbedingt notwendig. Denkt man sich beispielsweise ein umgekehrtes L-Profil,das mit einem Schenkel horizontal an einer Zimmerdecke montiert ist und mit dem anderen vertikalen Schenkel In der beschriebenen Weise zumindest den Raum über der Seitenkante abdeckt, und denkt man sich ferner dieses L-Profil vor einer Wand, also in einer Ecke, montiert, so könnte die Dämpfungseinrichtung auch durchaus zwischen dem Schiebetürelement und der Zimmerwand angebracht sein. Erfindungsgemäß bevorzugt sind jedoch Lösungen, die unabhängig von solchen Montagesituationen für eine Sichtabdeckung sorgen und damit die Dämpfungseinrichtung zwischen Schiene und Schiebetürelement vorsehen. In Betracht kommen bei der beschriebenen L-Profilform damit der Zwischenraum zwischen dem horizontalen Schenkel des "L" und dem Schiebetürelement, also gewissermaßen eine Montage der Dämpfungseinrichtung "über" dem Schiebetürelement, und der Zwischenraum zwischen dem vertikalen Schenkel der Schiene und dem Schiebetürelement, also gewissermaßen eine Montage "vor" dem Schiebetürelement. Bevorzugt ist. auch bei anderen Profilformen, eine Montage "über" dem Schiebetürelement, also zwischen einem horizontalen Schenkel der Schiene bzw. ihrer oberen Wand, und dem Schiebetürelement. Bevorzugt sind ferner Schienen in einer umgekehrten U-Form, die also gegenüber der beschriebenen L-Form einen weiteren vertikalen Schenkel aufweisen.

Die Schiene kann Lager zur Lagerung des Schiebetürelements in der verschiebbaren Weise in der Schiene aufweisen, etwa Systeme mit Führungsrollen und Laufflächen für diese. Dies gilt sowohl für den bereits erwähnten Fall, dass das Halten durch die Schiene lediglich einem seitlichen Führen in einer Bahn entspricht, als auch für den Fall einer Abstützung eines Teils des oder des gesamten Gewichts des Schiebetürelements.

Es ist ferner bevorzugt, dass die Dämpfungseinrichtung bei einer erfindungsgemäßen Lösung bei einer oberen Schiene angebracht ist, wenngleich Schiebetürsysteme meistens zusätzlich auch untere Schienen im Bodenbereich aufweisen. Bei den unteren Schienen sind eine minimale Baugröße und daher häufig kein zusätzlicher mechanischer Aufwand gewünscht. Ferner sind sie selbst dann Blicken von oben besonders gut zugänglich, wenn eine Sichtabdeckung in der (horizontalen) Richtung senkrecht zur Schiebetürelementebene besteht.

Bevorzugt ist im Rahmen der Erfindung schließlich eine Anwendung im Bereich von Schiebetürsystemen mit besonders schweren Schiebetürelementen, wie sie bei Raumteilern, Abteilungen von begehbaren Schränken, Toren und Zimmer- und Haustüren auftreten, also außerhalb der eigentlichen Möbel. Sie richtet sich demnach bevorzugt auf Schiebetürsysteme, die an Zimmer- oder Hauswänden montiert sind.

Im Folgenden wird die Erfindung anhand von Ausführungsbeispielen näher erläutert, wobei die einzelnen Merkmale auch in anderen Kombinationen erfindungswesentlich sein können und sich grundsätzlich auf alle Anspruchskategorien beziehen.
- Figur 1: zeigt sechs schematische Darstellungen einer erfindungsgemäßen Dämpfungseinrichtung nach einem ersten Ausführungsbeispiel in verschiedenen Bewegungszuständen und oben links eine Ansicht in Längsrichtung hierzu.
- Figur 2: zeigt weitere schematische Darstellungen zum ersten Ausführungsbeispiel analog Figur 1.
- Figur 3: zeigt die Dämpfungseinrichtung gemäß den Figuren 1 und 2 eingebaut in ein Schiebetürsystem in perspektivischer Darstellung.
- Figur 4: zeigt analog Figur 1 übereinander angeordnete schematische Darstellungen einer Dämpfungseinrichtung nach einem zweiten Ausführungsbeispiel in verschiedenen Bewegungszuständen.
- Figur 5: zeigt weitere Darstellungen analog Figur 4 zum zweiten Ausführungsbeispiel.
- Figur 6a: zeigt ein drittes Ausführungsbeispiel als Variante des ersten Ausführungsbeispiels.
- Figur 6b: zeigt ein viertes Ausführungsbeispiel als Variante des zweiten Ausführungsbeispiels.

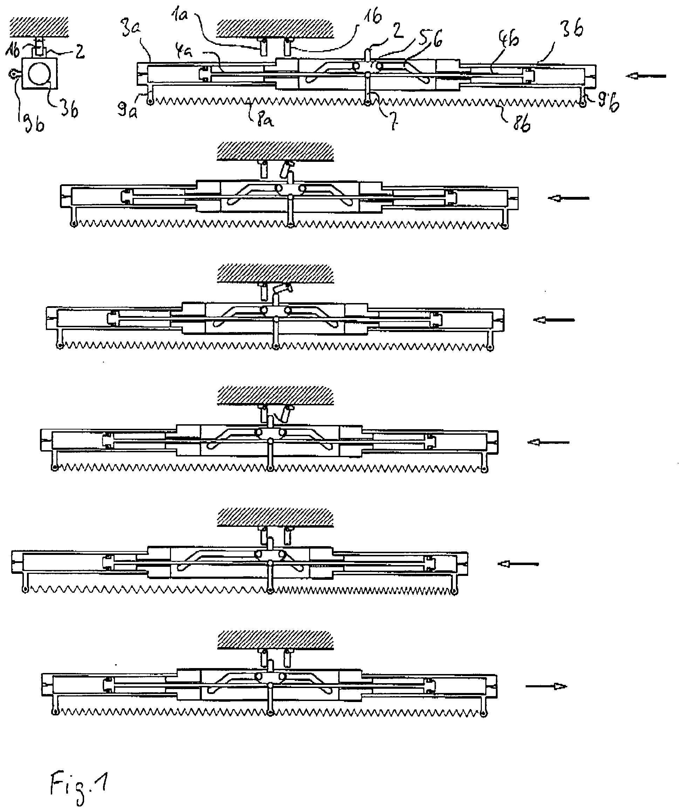

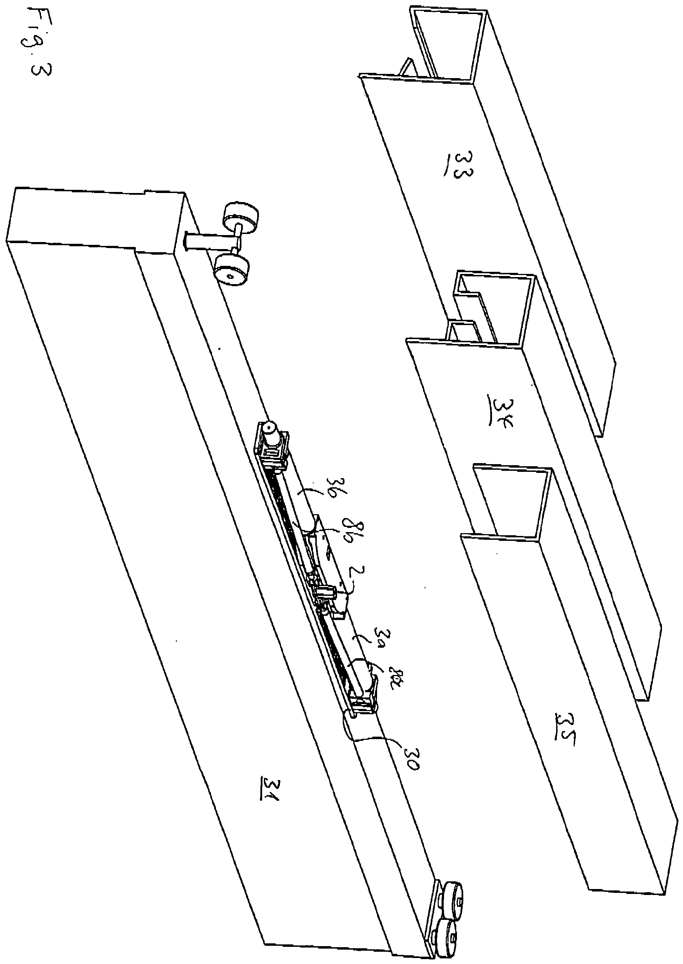

Figur 1 zeigt in sechs von oben nach unten aufeinander folgenden Einzeidarstellungen schematisch einen Bewegungsablauf einer erfindungsgemäßen Dämpfungseinrichtung. Die Bewegung erfolgt dabei in der Zeichenebene horizontal von rechts nach links, wie mit dem Pfeil bezeichnet, wobei lediglich die letzte Darstellung eine demgegenüber umgekehrte Bewegung meint. Im oberen Bereich Jeder Einzeldarstellung ist dabei schraffiert ein Teil einer anhand Figur 3 näher zu erläuternden Montageschiene dargestellt. Es könnte sich aber auch um eine Zimmerdecke handeln. Daran sind zwei jeweils zweiarmige Hebel 1a und 1b gelenkig befestigt, wie die Einzeldarstellungen im Vergleich für den rechten Hebel 1b zeigen, wobei die dargestellte Bewegung umgekehrt auch für den linken Hebel 1a möglich Ist. Man erkennt, dass der rechte Hebel 1b im Uhrzeigersinn um etwa 90° verdreht werden kann. In umgekehrter Richtung würde sein in der obersten Einzeldarstellung horizontal stehender kürzerer zweiter Hebelarm anschlagen und eine solche umgekehrte Bewegung sperren. Bei dem linken Hebel 1a verhält es sich genau umgekehrt.

Beide Hebel 1a und 1b bilden jeweils Anschlagelemente für einen Stift 2, der aus einer im folgenden noch näher erläuterten Dämpfungseinrichtung nach oben herausragt, die ihrerseits an einer in der Abfolge der Einzeldarstellungen von rechts nach links bewegten Schiebetür montiert ist. Der Vergleich der Einzeldarstellungen zeigt, dass dieser Stift 2 bei der dargestellten Bewegung zunächst den Hebel 1b nach oben wegschiebt, um dann gegen den Hebel 1a als Anschlag anzulaufen.

Die Dämpfungseinrichtung weist zwei gegenläufig arbeitende einzelne pneumatische Lineardämpfer 3a und 3b auf. Zu deren Aufbau wird verwiesen auf die bereits zitierte WO 2006/056606. Kurz zusammengefasst befindet sich am jeweiligen äußeren Ende der Dämpfer 3a und 3b ein Elastomerventil, das aus dem jeweiligen Zylinderinnenraum nach außen dringende Luftbewegungen drosselt und damit eine jeweils nach außen gerichtete Bewegung der jeweiligen Kolbenstange 4a bzw. 4b dämpft. Jeweilige Bewegungen nach innen werden weitaus weniger gedämpft, weil an dem Kolben selbst eine sich bei dieser Richtung etwas öffnende Dichtlippe vorgesehen ist.

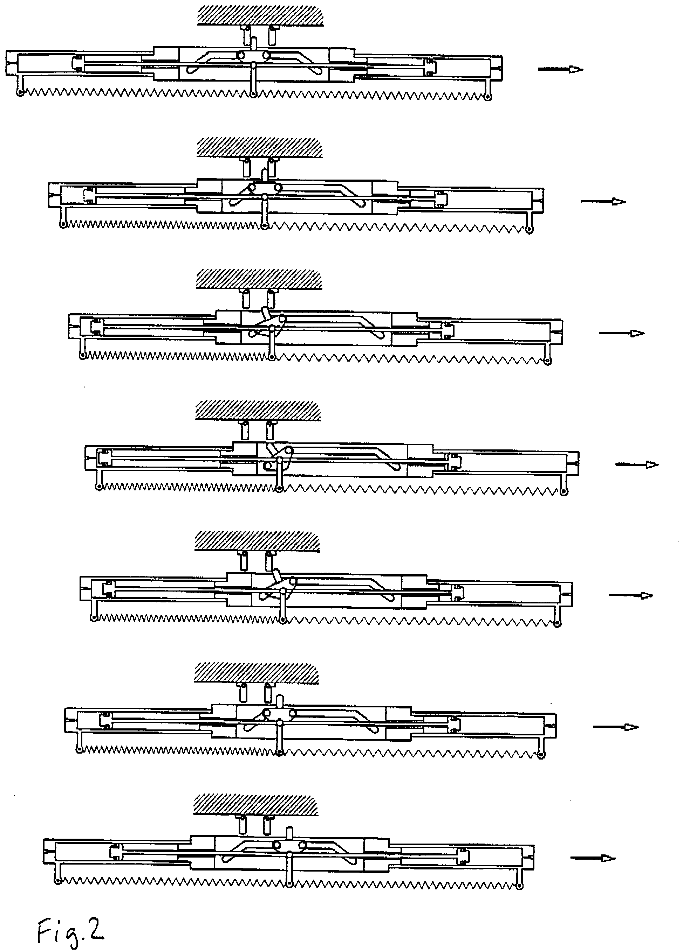

Die Kolbenstangen 4a und 4b sind in den Darstellungen erkennbar miteinander gekoppelt und dabei an einem mittig angeordneten Schieber 5 befestigt. Dieser Schieber 5 weist den bereits erwähnten Stift 2 auf und ist im Übrigen über zwei an seinen horizontal äußeren Enden vorgesehene Lagerstifte in einer Kulissenführung 6 geführt, die eine Schiebestrecke definiert. Die Kulissenführung 6 und die dadurch definierte Schiebestrecke weisen an ihren äußeren Enden In einem Winkel abknickende Abschnitte auf, die als Endstücke eine Freigabeposition des Schiebers 5 festlegen. Hierauf wird anhand Figur 2 noch näher eingegangen.

An dem Schieber 5 ist ferner ein in den Figuren nach unten und damit in zu dem Stift 2 entgegengesetzter Richtung weisender Montagehebel 7 befestigt. An diesem sind zwei Schraubenfedem 8a und 8b angebracht, die jeweils horizontal zu entsprechenden Montagehebeln 9a und 9b an den distalen Enden der Dämpfer gespannt sind, also in die Nähe der jeweiligen Elastomerventile.

In der Abfolge der Einzeldarstellungen erkennt man, dass die Schiebetür von rechts kommend auf die Hebel 1a und 1b zubewegt wird, wobei der Schieber in einer Mittelstellung gehalten ist und sich die Federkräfte der Federn 8a und 8b kompensieren. Dabei befinden sich die Kolben der beiden Dämpfer jeweils ungefähr in einer Mittelstellung. Der Stift 2 fährt an dem rechten Anschlaghebel 1b vorbei und stößt in der vierten Einzeldarstellung gegen den linken Hebel 1a. Die Masseträgheit der Schiebetür führt im Übergang zur fünften Einzeldarstellung dazu, dass der Schieber entlang dem geraden Teil der Schiebestrecke verschoben wird, wobei die linke Feder 8a gespannt wird. Diese Bewegung wird durch den rechten Dämpfer gedämpft, indem die Kolbenstange 4b in den entsprechenden Zylinder hinein geschoben wird. Im Übergang von der fünften zur sechsten Einzeldarstellung bewegt die Rückstellkraft der linken Feder 8a den Schieber 5 wieder in seine Mittelposition und nimmt dabei die Schiebetür mit. Diese Rückführbewegung wird durch den linken Dämpfer gedämpft, indem die Kolbenstange 4a in den dortigen Zylinder eingeschoben wird. Insgesamt hat die erfindungsgemäße Dämpfungseinrichtung hier also die Wirkung, eine trägheitsbedingte Bewegung der Schiebetür über die Position, in der der Stift 2 bei Mittelstellung des Schiebers 5 zwischen den Hebeln 1a und 1b angeordnet ist, hinaus zu dämpfen und die durch die Federn bewirkte Rückführung ebenfalls zu dämpfen.

Links oben erkennt man die Dämpfungseinrichtung in axialer Richtung gesehen, also mit einer in Bezug auf die übrigen Darstellungen um 90° um eine vertikale Achse in der Zeichenebene gedrehten Blickrichtung. Dabei ist vor allem zu erkennen, dass die Schraubenfedern 8a und 8b in Bezug auf die durch die Kolbenstangen 4a und 4b gegebene Achse relativ zu dem Stift 2 und den Hebeln 1a und 1b unter 90° angeordnet sind und nicht unter 180°, wie die übrigen Darstellungen suggerieren. Die den Bewegungsablauf illustrierenden Einzeldarstellungen sind hier aus zeichnerischen Gründen abgeändert. Natürlich bestehen aber grundsätzlich beide Möglichkeiten wie auch die später noch anhand Figur 3 illustrierte, bei der der Stift 2 nach oben zeigt, dabei aber der Schieber 5 und die Federn 8a und 8b auf der selben Seite der Dämpfer 3a und 3b angeordnet sind.

Figur 2 entspricht in der Art der Darstellung vollständig Figur 1; es ist auch die gleiche Dämpfungseinrichtung als erstes Ausführungsbeispiel gezeigt. Die Abfolge der Einzeldarstellungen zeigt hier allerdings eine Bewegung der Schiebetür aus der am Ende der Bewegungsfolge aus Figur 1 erreichten Position hinaus nach rechts. Dabei stößt der Stift 2 gleich zu Anfang, nämlich in der zweiten Einzeldarstellung, an den rechten Hebel 1b. Dadurch wird der Schieber 5 zunächst entlang dem geraden Abschnitt der Schiebestrecke verschoben, wie die zweite Einzeldarstellung zeigt. Darüber hinaus muss der Schieber aber bis in den verkippten Abschnitt der Schiebestrecke, wobei erst in der vierten Einzeldarstellung die Freigabeposition erreicht. In der Freigabeposition ist der Stift 2 soweit nach unten bewegt und zur Seite verkippt, dass er an dem langen Hebelarm des Hebels 1b vorbeigleiten kann. Man erkennt leicht, dass die Bewegung der ersten drei Einzeldarstellungen durch den linken Dämpfer gedämpft ist und die rechte Schraubenfeder 8b spannt. Die Spannung der Feder führt dann in der Abfolge der vierten bis siebten Einzeldarstellung dazu, dass der Schieber 5 wieder in seine Mittellage zurückkehrt. Hier wurde also im Sinn einer Schwelle dem Herausbewegen des Schiebetürelements aus der Mittelposition ein Widerstand entgegengesetzt, der teils durch die Dämpfungswirkung des linken Dämpfers und teils durch die Spannung der rechten Schraubenfeder 8b bedingt ist

Man kann sich im Übrigen leicht vorstellen, dass die Bewegung der Tür in eine Endposition in vergleichbarer Weise gedämpft und/oder hinsichtlich eines wieder aus dieser Endposition Herausfahrens mit einer "Schwelle" versehen werden kann. Ferner sind natürlich mehrere Mittelpositionen im Sinn der bisherigen Erläuterung möglich. Dabei kann abgesehen von den Hebeln 1a und 1b die selbe Dämpfungseinrichtung verwendet werden.

Figur 3 zeigt einige Illustrationen zum Einsatz an der Oberkante einer Schiebetür 31. Dabei ist die Dämpfungseinrichtung nach den Figuren 1 und 2 perspektivisch gezeigt, und zwar auf einer niedrigen Montageplatte 30.

Beispielsweise können dabei konventionelle Rollen, die die Schiebetür 31 nicht nur seitlich stützen, sondern auch vertikal tragen, vorgesehen sein, wie links vorne dargestellt. Sie können beispielsweise in einem Schienenprofil 33 mit etwas nach innen gewinkelten Laufflächen (zur Zentrierung) oder bei radial angepasster Rollengröße auch in der rechts daneben dargestellten Schiene 34 laufen. In der Schiene 34 laufen die Rollen auf dem Boden der jeweils für sich genommen (aufrecht) U-förmigen unteren Schenkelenden des insgesamt (umgekehrt) U-förmigen Schienenprofils. Dadurch ist auch eine seitliche Führung möglich.

Die Schienen 33 und 34 sind hier mit verlängertem vorderen Schenkel dargestellt. Stattdessen können auch zusätzliche Blendschienen aufgebracht werden, könnte der vertikale Abstand der Rollen von der oberen Kante des Türelements 31 verringert werden und/oder könnte die Stärke der Montageplatte 30 vergrößert werden.

Die zweite Rollenvariante rechts hinten dient nur zum seitlichen Halten, aber nicht zur Aufnahme der vertikalen Schwerkraft der Schiebetür 31. Sie passt zu dem mit 35 bezifferten Schienenprofil rechts. In diesem Fall würde die Schiebetür 31 auf unter ihr montierten Rollen im Bodenbereich laufen. Die lediglich seitlich führenden Rollen können weiter oberhalb in der Schiene 35 laufen, sodass keine Schenkelverlängerung notwendig ist. Eine seitliche Führung ist auch mit Gleitflächen statt Rollen möglich.

Alle Schienenprofile decken die Dämpfungseinrichtung und die Rollen in besonders günstiger Weise gegen Blicke von der Seite und z. T. auch von unten ab, wobei die Dämpfungseinrichtung und die Rollen zwischen den Schienenschenkeln und zwischen der Schienenbasis und der Schiebetür 31 untergebracht sind.

Die Dämpfungseinrichtung kann auch außerhalb der Rollen angebracht und mit Montageplatten außerhalb der Schienen beispielsweise an gegenüberliegenden Türholmen oder Wänden befestigt sein.

Ergänzend wird zur Illustration der Funktionsweise des Lineardämpfers und seines Einsatzes verwiesen auf die veröffentlichten Anmeldungen EP 04 106 110.2 und WO 2006/056606 desselben Anmelders. Dabei gilt insgesamt, dass je nach Interesse im Einzelfall Mittelphasen und auch Endphasen der Bewegung an einem von zwei oder auch an beiden Anschlägen einer Tür oder eines anderen beweglichen Elements gedämpft werden können. Im Übrigen wird ergänzend darauf verwiesen, dass der Montagefortsatz 27 in Figur 3 eine Einstellvorrichtung enthalten könnte, wie sie in der zitierten WO-Schrift in Figur 9 und 10 dargestellt und darauf Bezug nehmend in der Beschreibung erläutert ist. Eine Wiederholung dieser Darstellung erscheint hier überflüssig.

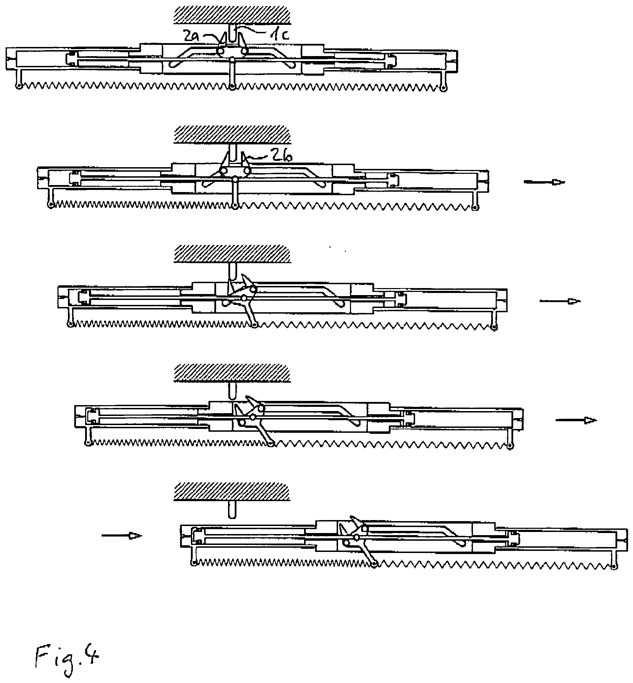

Figur 4 zeigt wieder in Einzeldarstellung eine Bewegungsfolge entsprechend den Figuren 1 und 2. jedoch bezogen auf ein zweites Ausführungsbeispiel. Dieses unterscheidet sich von dem ersten Ausführungsbeispiel lediglich durch die Ausgestaltung der Kupplung an dem Schieber 5. Statt der Hebel 1a und 1b aus den Figuren 1 und 2 ist hier ein einzelner fest stehender Stift 1c vorgesehen. Ferner ist statt des einzelnen fest stehenden Stifts 2 aus den Figuren 1 und 2 eine gabelartige Struktur 2a und 2b vorgesehen, die eine Ausnehmung zur Aufnahme des Stifts 1c definiert. Im Übrigen gelten die Erläuterungen zu den Figuren 1 und 2. In der Abfolge der Darstellungen erkennt man. dass beim Herausfahren der Schiebetür aus der durch den Formschluss zwischen der Gabelaufnahme 2a, b und dem Stift 1c festgelegten Position der Schieber 5 zunächst gegen die Dämpfungswirkung des linken Dämpfers und die Federspannung der rechten Feder 8b verschoben wird und eine Freigabe in der dritten Einzeldarstellung dadurch erfolgt, dass sich der linke Teil 2a der Gabelaufnahme 2a, b absenkt und wegkippt. In diesem Fall ist vorgesehen, dass die Verkippung des Schiebers 5 in das Endstück der Kulissenführung zu einer Fixierung führt, und zwar in einer ähnlichen Weise wie in der bereits mehrfach zitierten WO-Schrift dargestellt.

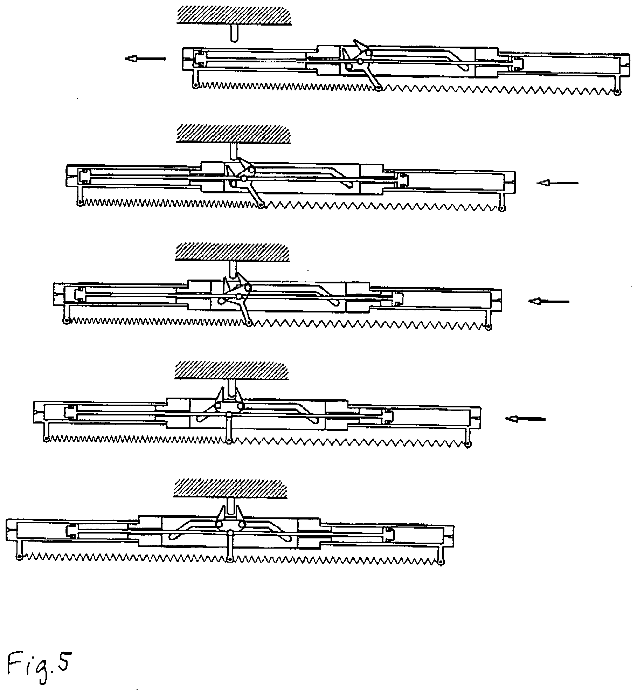

Figur 5 zeigt dementsprechend eine umgekehrte Bewegung, bei der der Stift 1c gegen den rechten Teil 2b der Gabelaufnahme stößt, wenn die Schiebetür von rechts kommend nach links bewegt wird. Dadurch wird der Schieber 5 aus der abgewinkelten Position herausgelöst und kommt wieder in Formschluss mit dem Stift 1c. Dieser Formschluss sorgt nun unabhängig von dem Restschwung der Schiebetür dafür. dass diese allein durch die Kraft der gespannten rechten Feder 8b in die Mittelposition gefahren wird, wobei der rechte Dämpfer dämpft. Wenn dabei der Restschwung der Schiebetür groß genug ist, um für ein über diese Mittelposition Hinausfahren zu sorgen, tritt grundsätzlich die gleiche Dämpfungswirkung ein wie in Figur 1 dargestellt

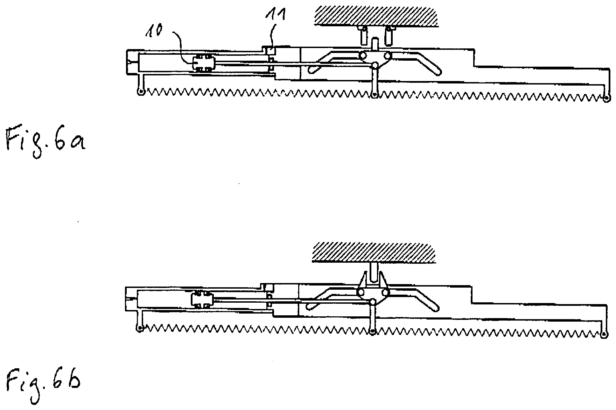

Die bisherigen Ausführungsbeispiele weisen zwei gegenläufig arbeitende und jeweils in einer Richtung dämpfende Lineardämpfer auf. Die Figuren 6a und 6b zeigen Varianten hierzu als drittes und viertes Ausführungsbeispiel. Hier Ist der rechte Dämpfer weggelassen und stattdessen links Jeweils der gleiche doppelt wirkende Lineardämpfer eingesetzt. Dessen Kolben 10 ist mit zwei Dichtlippen ausgestattet, die jeweils dem ersten und zweiten Ausführungsbelsplel entsprechen, aber doppelt und antisymmetrisch vorgesehen sind, so dass der Kolben in beiden Bewegungsrichtungen gedichtet geführt wird. Zusätzlich zu dem in den Figuren 1 und 2 symbolisch dargestellten Ventil am distalen Ende des Dämpfers weist der Dämpfer in den Figuren 6a und 6b ein weiteres ebenfalls nur symbolisch dargestelltes Ventil 11 an seinem proximalen Ende auf und wirkt damit in beiden Richtungen. Es ergibt sich leicht, dass ein doppelt wirkender Dämpfer die beiden einfach wirkenden Dämpfer ersetzt. Im Übrigen gelten die obigen Erläuterungen.

## Patentansprüche

1. Einrichtung zum Dämpfen der Relativbewegung bewegter Vorrichtungsteile (31, 33, 34, 35)
mit
einem Dämpfer (3a,b),
einer Kupplung (1a,b,c; 2; 2a,b; 5; 6; 7; 8a,b) zum Herstellen und Lösen eines Kraftschlusses zwischen einem ersten der Vorrichtungsteile (31, 33, 34, 35) und einem Ende des Dämpfers (3a,b),
wobei ein anderes Ende des Dämpfers (3a,b) mit einem zweiten der Vorrichtungsteile (31, 33, 34, 35) gekoppelt ist,
sodass der Dämpfer (3a,b) im geschlossenen Zustand der Kupplung (1a,b,c; 2; 2a,b; 5; 6; 7; 8a,b) eine Relativbewegung zwischen den beiden Vorrichtungsteilen (31, 33, 34, 35) dämpft,
und wobei die beiden Vorrichtungsteile (31, 33, 34, 35) in zwei entgegengesetzten Richtungen zueinander bewegbar sind,
**dadurch gekennzeichnet, dass**
sich die Kupplung (1a,b,c; 2; 2a,b; 5; 6; 7; 8a,b) bei Relativbewegungen der beiden Vorrichtungsteile (31, 33, 34, 35) in beiden Richtungen lösen kann.

2. Einrichtung nach Anspruch 1, bei der die Kupplung (1a,b,c; 2; 2a,b; 5; 6; 7; 8a,b) durch eine mechanische Wechselwirkung funktioniert, insbesondere durch einen körperlichen Anschlag und/oder einen körperlichen Formschluss.

3. Einrichtung nach Anspruch 1 oder 2, bei der die Kupplung (1a,b,c; 2; 2a,b; 5; 6; 7; 8a,b) einen Schieber (5) aufweist, der entlang einer Schiebestrecke (6) und in ein abgewinkeltes Endstück der Schiebestrecke (6) bewegbar ist, welches Endstück einer Freigabeposition der Kupplung (1a,b, c; 2; 2a,b; 5; 6; 7; 8a,b) entspricht.

4. Einrichtung nach einem der vorstehenden Ansprüche, bei der die Kupplung (1a,b, 2; 5; 6; 7; 8a,b) zwei Anschlagelemente (1a,b) aufweist, die jeweils nach einer Seite fest und nach einer anderen Seite nachgebend gehalten sind.

5. Einrichtung nach Anspruch 4, bei der die Anschlagelemente (1a,b) Hebel sind, die gelenkig gelagert sind und dabei in eine Richtung anschlagen und in einer anderen Richtung gelenkig ausweichen können.

6. Einrichtung nach Anspruch 5, bei der die Hebel (1a,b) zweiarmig sind, wobei jeweils ein erster Arm als Anschlagelement für ein komplementäres Kupplungsteil und ein zweiter Arm zum Anschlagen des Hebels gegen ein weiteres Element dient.

7. Einrichtung nach Anspruch3, bei der die Kupplung (1c; 2a,b; 5; 6; 7; 8a,b) ein feststehendes Anschlagelement (1c) aufweist und der Schieber (5) gabelartig (2a,b) ausgebildet ist, wobei die Einrichtung dazu ausgebildet ist, dass der Schieber (5) mit seiner gabelartigen Form (2a,b) das Anschlagelement (1c) umgreift, wenn der Schieber (5) in einem Mittelbereich der Schiebestrecke (6) angeordnet ist, und das Anschlagelement (1c) zu einer Außenseite freigibt, wenn sich der Schieber (5) in der Freigabeposition in dem abgewinkelten Endstück der Schiebestrecke (6) befindet.

8. Einrichtung nach einem der vorstehenden Ansprüche, bei der die Kupplung (1a,b,c; 2; 2a,b; 5; 6; 7; 8a,b) eine elastische Einrichtung (8a,b), vorzugsweise eine Feder, zum Rückstellen eines Kupplungsteils (5) aus einer Freigabeposition und/oder in eine Mittelposition aufweist.

9. Einrichtung nach Anspruch3 und 8, bei der beide elastischen Einrichtungen (8a,b) vorgesehen und identisch sind und zwei Schraubenfedern aufweisen, die jeweils mit dem Schieber (5) und einem relativ zu dem Dämpfer festen Teil (9a,b) gekoppelt und bezüglich der Relativbewegungsrichtungen der Vorrichtungsteile (31, 33, 34, 35) beidseits des Schiebers (5) angeordnet sind.

10. Einrichtung nach Anspruch 8 oder 9, bei der die Kupplung (1c; 2a,b; 5; 6; 7; 8a,b) bei dem Rückstellen in die Mittelposition die beiden Vorrichtungsteile (31, 33, 34, 35) in eine der Mittelposition entsprechende Relativposition bewegt.

11. Einrichtung nach einem der vorstehenden Ansprüche mit zwei gegenläufig arbeitenden Dämpfern (8a,b).

12. Verwendung einer Dämpfungseinrichtung nach einem der Ansprüche 1 - 11 für eine Schiebetür (31).

13. Verwendung nach Anspruch 12 für ein Schiebetürsystem mit einem Schiebetürelement (31), das in einer Schieberichtung verschoben werden kann und eine schieberichtungsparallele Seitenkante aufweist,
einer Schiene (33 - 35) zum Halten des Schiebetürelements (31), die zumindest einen Raum oberhalb der Seitenkante mit einem Schienenschenkel umfasst und dadurch zumindest in einer zu dem Schiebetürelement (31) senkrechten Blickrichtung abdeckt und gegenüber der das Schiebetürelement (31) verschoben werden kann,
wobei die Dämpfungseinrichtung zum Abdämpfen zumindest eines Teils von Verschiebebewegungen des Schiebetürelements (31) gegenüber der Schiene (33 - 35) ausgelegt und einerseits an der Schiene (33 - 35) und andererseits an dem Schiebetürelement (31) angebracht ist,
und dabei so innerhalb der Schiene (33 - 35) angebracht ist, dass er durch die Schiene (33 -35) in der auf dem Schiebetürelement (31) senkrechten Blickrichtung abgedeckt ist.

14. Verwendung nach Anspruch 13, bei dem die Dämpfungseinrichtung zwischen der Schiene (33-35) und dem Schiebetürelement (31) angebracht ist.

15. Verwendung nach Anspruch 14, bei dem zwischen der Schiene (33-35) und dem Schiebetürelement (31) ein Lager zur Lagerung des Schiebetürelements (31) in der Schiene angebracht ist.

## Claims

1. A device for damping the relative movement of moved apparatus parts (31, 33, 34, 35)
having
a damper (3a,b),
a coupling (1a,b,c; 2; 2a,b; 5; 6; 7; 8a,b) for establishing and releasing a frictional connection between a first one of said apparatus parts (31, 33, 34, 35) and an end of said damper (3a,b),
wherein another end of said damper (3a,b) is coupled with a second one of said apparatus parts (31, 33, 34, 35),
so that said damper (3a,b) damps a relative movement between the two apparatus parts (31, 33, 34, 35) when said coupling (1a,b,c; 2; 2a,b; 5; 6; 7; 8a,b) is in a closed state,
and wherein said two apparatus parts (31, 33, 34, 35) are movable with respect to each other in two opposite directions,
**characterized in that**
said coupling (1a,b,c; 2; 2a,b; 5; 6; 7; 8a,b) can disengage in both directions upon relative movements of said two apparatus parts (31, 33, 34, 35).

2. The device according to claim 1, wherein said coupling (1a,b,c; 2; 2a,b; 5; 6; 7; 8a,b) works by a mechanical interaction, in particular a physical stop and/or a physical form-fit.

3. The device according to claim 1 or 2, wherein said coupling (1a,b,c; 2; 2a,b; 5; 6; 7; 8a,b) comprises a slide (5) being movable along a slide way (6) and into an angled end portion of said slide way (6), said end portion corresponding to a release position of said coupling (1a,b,c; 2; 2a,b; 5; 6; 7; 8a,b).

4. The device according to one of the preceding claims, wherein said coupling (1a,b,c; 2; 2a,b; 5; 6; 7; 8a,b) comprises two stop elements (1a,b), which are respectively held tight towards one side and held yielding towards another side.

5. The device according to claim 4, wherein said stop elements (1a,b) are levers which are articulated and, therein, find a stop in one direction and are able to yield in an articulated manner in another direction.

6. The device according to claim 5, wherein said levers (1a,b) are of a two-armed type, wherein respectively a first arm serves as a stop element for a complementary coupling part and a second arm serves for bringing said lever into a stop against a further element.

7. The device according to claim 3, wherein said coupling (1a,b,c; 2; 2a,b; 5; 6; 7; 8a,b) comprises a stationary stop element (1c) and said slide (5) is provided in a fork-like shape (2a,b), wherein said device is adapted for said slide (5) embracing said stop element (1c) with its fork-like shape (2a,b), when said slide (5) is arranged in a middle section of said slide way (6), and for releasing said stop element (1c) towards an outer side, when said slide (5) is arranged in said release position in said angled end portion of said slide way (6).

8. The device according to one of the preceding claims, wherein said coupling (1a,b,c; 2; 2a,b; 5; 6; 7; 8a,b) comprises an elastic member (8a,b), preferably a spring, for readjusting a coupling part (5) from a release position and/or into a middle position.

9. The device according to claims 3 and 8, wherein both elastic members (8a,b) are provided and are identical and comprise two helical springs which are respectively coupled with said slide (5) and a part (9a,b) stationary with respect to said damper and which are arranged on both sides of said slide (5) with respect to the relative movement directions of said apparatus parts (31, 33, 34, 35).

10. The device according to claim 8 or 9, wherein said coupling (1c; 2a,b; 5; 6; 7; 8a,b), upon said readjusting into said middle position, moves said two apparatus parts (31, 33, 34, 35) into a relative position corresponding to said middle position.

11. The device according to one of the preceding claims, having two dampers (8a,b) working in opposite direction.

12. A use of a device for damping according to one of claims 1 - 11 for a slide door (31).

13. The use according to claim 12 for a slide door system having a slide door element (31) slideable in a slide direction and comprising a side edge parallel to the slide direction,
a rail (33 - 35) for holding said slide door element (31), which embraces at least a space above said side edge by a rail leg so that said rail covers said space at least in a viewing direction perpendicular to said slide door element (31), said slide door element (31) being slideable with respect to said rail,
wherein said device for damping is adapted for damping relative movements of said sliding door element (31) with respect to said rail (33 - 35) at least partly, said device for damping being, on the one hand, attached to said rail (33 - 35) and being, on the other hand, attached to said sliding door element (31),
therein being arranged inside said rail (33 - 35) in such a way, that it is covered by said rail (33 - 35) in said viewing direction perpendicular to said sliding door element (31).

14. The use according to claim 13, wherein said device for damping is attached between said rail (33 - 35) and said slide door element (31).

15. The use according to claim 14, wherein a bearing for mounting said slide door element (31) in said rail is attached between said rail (33 - 35) and said slide door element (31).

## Revendications

1. Dispositif d'amortissement du mouvement relatif d'éléments mobiles (31, 33, 34, 35) comprenant:
un amortisseur (3a,b),
un couplage (1a,b,c; 2; 2a,b; 5; 6; 7; 8a,b) permettant d'établir et de rompre une coopération par force entre un premier desdits éléments mobiles (31, 33, 34, 35) et une extrémité de l'amortisseur (3a,b);
une autre extrémité de l'amortisseur (3a,b) étant couplée à un deuxième desdits éléments mobiles (31, 33, 34, 35),
de telle manière que, à l'état fermé du couplage (1a,b,c; 2; 2a,b; 5; 6; 7; 8a,b), l'amortisseur (3a,b) amortit un mouvement relatif entre les deux éléments mobiles (31, 33, 34, 35),
les deux éléments mobiles (31, 33, 34, 35) pouvant être déplacés dans deux directions opposées entre elles;
**caractérisé en ce que**
le couplage (1a,b,c; 2; 2a,b; 5; 6; 7; 8a,b) peut se rompre lors de mouvements relatifs des deux éléments mobiles (31, 33, 34, 35) dans deux directions.

2. Dispositif selon la revendication 1, dans lequel le couplage (1a,b,c; 2; 2a,b; 5; 6; 7; 8a,b) fonctionne par le biais d'une interaction mécanique, notamment par le biais d'une butée physique et/ou d'une complémentarité de forme physique.

3. Dispositif selon la revendication 1 ou 2, dans lequel le couplage (1a,b,c; 2; 2a,b; 5; 6; 7; 8a,b) présente un curseur (5) mobile le long d'une trajectoire de coulissement (6) et dans une partie terminale coudée de la trajectoire de coulissement (6), laquelle partie terminale correspond à une position de libération du couplage (1a,b,c: 2: 2a,b; 5; 6; 7; 8a,b).

4. Dispositif selon l'une des revendications précédentes, dans lequel le couplage (1a,b, 2; 5; 6; 7; 8a,b) présente deux éléments de butée (1a,b) montés respectivement fixes sur un côté mais pouvant se dérober sur un autre côté.

5. Dispositif selon la revendication 4, dans lequel les éléments de butée (1a,b) consistent en des leviers montés articulés, ce qui leur permet de former butée dans une direction et de s'escamoter dans une autre direction.

6. Dispositif selon la revendication 5, dans lequel les leviers (1a,b) sont à deux bras, moyennant quoi un premier bras sert d'élément de butée à une pièce de couplage complémentaire et un deuxième bras sert de butée au levier contre un autre composant.

7. Dispositif selon la revendication 3, dans lequel le couplage (1c; 2a,b; 5; 6; 7; 8a,b) présente un élément de butée fixe (1c) et le curseur (5) est constitué en forme de fourche (2a,b), ledit dispositif étant conçu pour que le curseur (5) enserre l'élément de butée (1c), de par sa forme de fourche (2a,b) lorsque le curseur (5) est disposé dans une zone intermédiaire de la trajectoire de coulissement (6), et pour qu'il libère l'élément de butée (1c) sur un côté extérieur, lorsque le curseur (5) se trouve dans la position de libération dans la partie terminale coudée de la trajectoire de coulissement (6).

8. Dispositif selon l'une des revendications précédentes, dans lequel le couplage (1a,b,c; 2; 2a,b; 5; 6; 7; 8a,b) présente un dispositif élastique (8a,b), de préférence un ressort, pour rétablir une pièce de couplage (5) hors de la position de libération et/ou dans une position intermédiaire.

9. Dispositif selon les revendications 3 et 8, dans lequel les deux dispositifs élastiques (8a,b) prévus sont identiques et présentent deux ressorts hélicoïdaux qui sont respectivement couplés avec le curseur (5) et une pièce (9a,b) fixe relativement à l'amortisseur, et qui sont situés de chaque côté du curseur (5) eu égard aux directions de mouvement relatif des éléments mobiles (31, 33, 34, 35).

10. Dispositif selon la revendication 8 ou 9, dans lequel le couplage (1c: 2a,b; 5; 6; 7; 8a,b) déplace les deux composants de dispositif (31, 33, 34, 35) dans une position relative correspondant à la position intermédiaire, lors du rétablissement dans la position intermédiaire.

11. Dispositif selon l'une des revendications précédentes, comportant deux amortisseurs (8a,b) fonctionnant dans des sens contraires.

12. Utilisation d'un dispositif d'amortissement selon l'une des revendications 1 à 11 pour une porte coulissante (31).

13. Utilisation selon la revendication 12 pour un système de porte coulissante comprenant : un composant de porte coulissante (31) susceptible d'être repoussé dans une direction de coulissement et présentant un bord latéral parallèle à ladite direction de coulissement,
une glissière (33-35) permettant de maintenir le composant de porte coulissante (31), laquelle glissière, par une aile de glissière, enveloppe au moins un espace situé au-dessus du bord latéral en le recouvrant, au moins vu selon un sens perpendiculaire au composant de porte coulissante (31), le composant de porte coulissante (31) pouvant être translaté par rapport à ladite glissière,
ledit dispositif d'amortissement étant conçu pour amortir au moins une proportion du mouvement de translation du composant de porte coulissante (31) par rapport à la glissière (33-35) en étant disposé, d'une part, contre la glissière (33-35) et, d'autre part, contre le composant de porte coulissante (31),
et il est ainsi disposé à l'intérieur de la glissière (33-35) de manière à être recouvert par la glissière (33-35), vu selon un sens perpendiculaire au composant de porte coulissante (31).

14. Utilisation selon la revendication 13, dans laquelle le dispositif d'amortissement est disposé entre la glissière (33-35) et le composant de porte coulissante (31).

15. Utilisation selon la revendication 14, dans laquelle un roulement est disposé entre la glissière (33-35) et le composant de porte coulissante (31) pour l'appui dudit composant de porte coulissante (31) dans ladite glissière.
